# EUROPÄISCHE PATENTSCHRIFT

(11) **EP 1 560 689 B1**
(45) Veröffentlichungstag und Bekanntmachung des Hinweises auf die Patenterteilung: **22.03.2006**
(21) Anmeldenummer: 03747807.0
(22) Anmeldetag: 20.08.2003
(51) Int. Cl.: B29C 45/14, F16J 15/32, B25B 27/00

(54) **TRANSPORT- UND MONTAGEHILFE**
TRANSPORT AND ASSEMBLY AID
AUXILIAIRE DE TRANSPORT ET DE MONTAGE

(30) Priorität: 12.10.2002 DE 10247726
(43) Veröffentlichungstag der Anmeldung: 10.08.2005
(73) Patentinhaber: Federal-Mogul Sealing Systems Bretten GmbH, 75015 Bretten (DE)
(72) Erfinder: WALZ, Timo, 75053 Gondelsheim (DE); SALAMEH, Ralf, 75053 Gondelsheim (DE)
(86) Internationale Anmeldenummer: PCT/DE2003/002765
(87) Internationale Veröffentlichungsnummer: WO 2004/035288

(56) Entgegenhaltungen:
- EP-A- 0 512 673
- DE-C- 19 845 920
- US-A- 5 577 314

## Beschreibung

Die Erfindung betrifft eine Transport- und Montagehilfe für Gummiformdichtungen.

In der DE-A 198 29 833 ist eine Montagehilfe für die Befestigung einer elastischen Ringdichtung auf einem Dichtungsträgerbauteil an einem Befestigungsrand um eine Bauteilöffnung beschrieben, wobei die Ringdichtung eine zumindest teilweise umlaufende Klebefläche für die Befestigung am Befestigungsrand aufweist und ein weiteres Anbauteil unter Zwischenschaltung der befestigten Ringdichtung dichtend befestigbar ist. Die Montagehilfe weist eine Basisplatte mit einer Erhebung auf, wobei die Fußkontur der Erhebung der Ausschnittsform der Bauteilöffnung entspricht. Die Randkontur an der Basisplatte um die Fußkontur der Erhebung stellt eine Negativabbildung der Anlagefläche des Befestigungsrandes an der Bauteilöffnung dar. Mit dieser Montagehilfe kann eine Ringdichtung mit umlaufender Klebefläche zentriert und lagegenau um die Bauteilöffnung fixiert werden. Eine derartige Montagehilfe ist für den Einsatz bei Gummiformdichtungen nicht geeignet.
Die DE 19845920 C 1 offenbart eine Montagehilfe in Form einer Montageplatte, die Einspritzbohrungen zur Erzeugung der Dichtung aufweist. Nach dem Einspritzen des Dichtungsmaterials ist die Dichtung über Angußnippel mit der Montageplatte verbunden. Die Dichtung wird zusammen mit der Montageplatte in das abzudichtende Maschinenteil gelegt. Danach wird die Montageplatte von der Dichtung gelöst, dabei reißt das Dichtungsmaterial im Bereich der Angußnippel ab.

Eine solche Transport und Montagehilfe ist durch die DE 19848043 C2 offenbart. Diese Schrift offenbart einen Trägerrahmen der in einer seitlichen Nut der Dichtung eingreift. geworden. Die Montagehilfe besteht aus Spritzmateral und nicht aus Kunststoff oder Metall. Darüberhinaus ist der Trägermbmen nicht lösbar mit der Dichtung verbunden.

Reine Gummiformdichtungen sind forminstabil. Dies bedeutet, dass sich die Gummiformdichtungen fast nicht für automatisierte Fertigungs- bzw. Montageprozesse eignen. Des weiteren müssen die Gummiformdichtungen bei allen Kontroll- und Transportvorgängen wieder lagerichtig ausgerichtet werden. Dieser Vorgang wiederholt sich ein letztes Mal, wenn die Dichtung beim Endkunden oder Systemlieferanten in eine Nut eingeknüpft wird.

Der Erfindung liegt die Aufgabe zugrunde, Gummiformdichtungen für Transport und Montage zu stabilisieren, ohne dass es zu einer wesentlichen Kostensteigerung kommt Durch diese Maßnahme soll ein im wesentlichen vollautomatischer Herstell-, Transport- und Montageprozeß realisiert werden.
Diese Aufgabe wird erfindungsgemäß durch die Merkmale des Patentanspruch 1 gelöst. Vorteilhafte Weiterbildungen der erfindungsgemäßen Transport- und Montage hilfe sind den zugehörigen Unteransprüchen zu entnehmen.

Grundgedanke des Erfindungsgegenstandes ist es, die Gummiformdichtung an einen Trägerrahmen anzuhängen, der dann über den gesamten Fertigungs-, Prüfungs- und Transportweg am Gummiformteil verbleibt. Ein wesentlicher Vorteil ist auch in der Montage begründet. Hier wird der Rahmen dann von der Gummiformdichtung gelöst.

Je nach Ausführungsform des Trägerrahmens kann selbiger wiederverwendbar oder aber aus preiswerten Materialien, wie Draht, Kunststoff, Karton oder dergleichen bestehen und als Wegwerfteil ausgebildet sein. Der Trägerrahmen istörtlich an mehreren Stellen der Gummiformdichtung anliegend ausgebildet.
Der Erfindungsgegenstand ist anhand eines Ausführungsbeispieles in der Zeichnung dargestellt und wird wie folgt beschrieben. Es zeigen:
Figur 1 Prinzipskizze eines geschlossenen Trägerrahmens;
Figur 2 Teildarstellung einer im Querschnitt I-förmig ausgebildeten Gummiformdichtung;
Figur 3 Kombination aus Trägerrahmen und Gummiformdichtung;
Figur 4 Angedeutete Verbindungsbereiche des Trägcnahmens an der Gummiformdichtung.

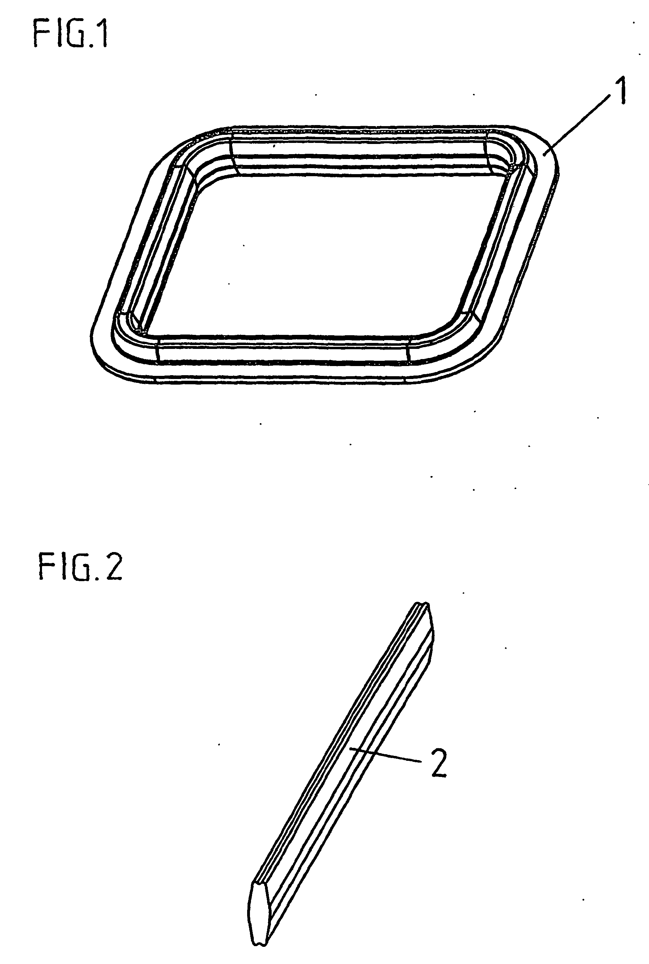

Figur 1 zeigt einen, in diesem Beispiel aus Kunststoff bestehenden stabilen Trägerrahmen 1.
Figur 2 zeigt eine forminstabile Gummiformdichtung 2 mit I-förmigem Querschnitt.

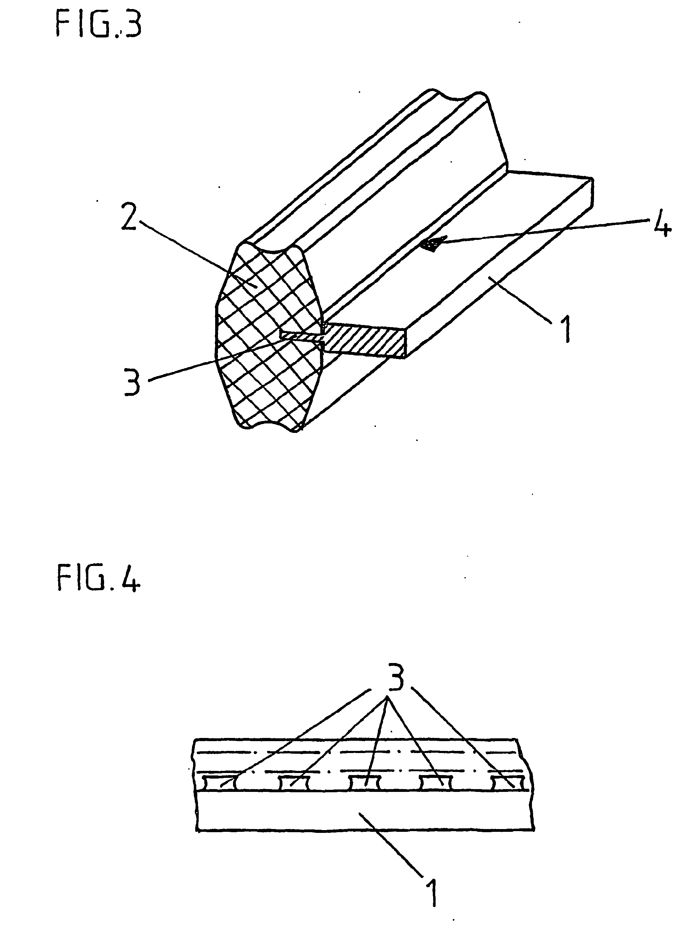

In Figur 3 ist der Zustand dargestellt, wie er sich nach dem Verlassen der Spritzmaschine einstellt. Erkennbar ist die Gummiformdichtung 2, der Trägerrahmen 1 sowie eine einzelne Verbindungsnase 3. In diesem Zustand kann die nun formstabile Gummiformdichtung über ihren weiteren Fertigungs- und Transportprozeß problemlos gehandhabt werden. Erkennbar ist ein Randbereich, an welchem der Trägerrahmen 1 anliegt. Je nach Ausgestaltungsform der Gummiformdichtung 2 kann der Trägerrahmen 1 an inneren oder äußeren Randbereichen 4 vorgesehen werden.
In Figur 4 sind mehrere der in Figur 3 angedeuteten Verbindungsnasen 3 dargestellt Für den Montagevorgang wird der Trägenahmen 1 über die Sollbruchstellen bildenden Verbindungsnasen 3 abgeknickt und kann bedarfsweise wiederverwendet werden.

## Patentansprüche

1. Transport- und Montagehilfe für Gummiformdichtungen, bestehend aus einem der Kontur der Gummiformdichtung (2) angepaßten Trägerrahmen (1) aus Kunststoff oder Metall, der umfangsseitig am Randbereich (4) der Gummiformdichtung (2) lösbar fixiert ist, **dadurch gekennzeichnet, dass** der Trägerrahmen (1) über Verbindungsnasen (3) verfügt, die mit umspritzt sind, so dass sie nach der Erzeugung der Gummiformdichturig (2) vom Dichtungsmaterial umgeben sind und dass der Trägerrahmen (1) beim Montagevorgang von der Gummiformdichtung (2) entfernbar ist.

2. Transport- und Montagehilfe nach Anspruch 1, **dadurch gekennzeichnet, dass** der Trägerrahmen (1) ein wiederverwendbares Kunststoff- oder Metallteil ist.

3. Transport- und Montagehilfe nach Anspruch 1, **dadurch gekennzeichnet, dass** der Trägerrahmen (1) ein Wegwerfteil, insbesondere aus Draht, Kunststoff oder Karton ist.

## Revendications

1. Auxiliaire de transport et de montage pour des joints moulés en caoutchouc, composé d'un cadre porteur (1) en matière plastique ou en métal, adapté au contour du joint moulé en caoutchouc (2), qui sur sa périphérie est fixé de façon amovible sur la zone de bordure (4) du joint moulé en caoutchouc (2), **caractérisé en ce que** le cadre porteur (1) est muni de tenons de liaison (3) qui sont gainés simultanément, pour qu'après la création du joint moulé en caoutchouc (2), ils soient enrobés de matériau d'étanchéité et **en ce que** le cadre porteur (1) peut être retiré du joint moulé en caoutchouc (2) au cours du processus de montage.

2. Auxiliaire de transport et de montage selon la revendication 1, **caractérisé en ce que** le cadre porteur (1) est un élément réutilisable, en matière plastique ou en métal.

3. Auxiliaire de transport et de montage selon la revendication 1, **caractérisé en ce que** le cadre porteur (1) est un élément jetable, notamment en fil métallique, en matière plastique ou en carton.

## Claims

1. Transport and assembly aid for moulded rubber seals, said aid comprising a support frame (1), formed from plastics material or metal, which is matched to the contour of the moulded rubber seal (2) and is detachably fixed to the perimeter of the edge region (4) of the moulded rubber seal (2), **characterised in that** the support frame (1) has connecting lugs (3) which are injection-moulded at the same time so that after the moulded rubber seal (2) has been created they are surrounded by the sealing material and **in that** the support frame (1) may be removed from the moulded rubber seal (2) during the assembly process.

2. Transport and assembly aid according to claim 1, **characterised in that** the support frame (1) is a reusable plastics or metal part.

3. Transport and assembly aid according to claim 1, **characterised in that** the support frame (1) is a disposable part, formed especially from wire, plastics material or cardboard.
